(19) **Europäisches Patentamt / European Patent Office / Office européen des brevets**

(11) **EP 4 582 829 A1**

(12) **EUROPEAN PATENT APPLICATION**

(43) Date of publication:
**09.07.2025 Bulletin 2025/28**

(21) Application number: **24150374.7**

(22) Date of filing: **04.01.2024**

(51) International Patent Classification (IPC):
**G01S 7/02** (2006.01)    **G01S 13/931** (2020.01)
**G01S 13/32** (2006.01)

(52) Cooperative Patent Classification (CPC):
**G01S 7/0233; G01S 13/325; G01S 13/931**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GM Cruise Holdings LLC**
**San Francisco, CA 94107 (US)**

(72) Inventors:
- **BARTHELME, Andreas**
  **85521 Ottobrunn (DE)**
- **PELGER-ALZNER, Bernhart**
  **85521 Ottobrunn (DE)**

(74) Representative: **Berkenbrink, Kai-Oliver et al**
**Patentanwälte Becker & Müller**
**Turmstrasse 22**
**40878 Ratingen (DE)**

(54) **FLEET-INTERNAL INTERFERENCE MITIGATION WITH RADAR-UNIQUE PHASE CODES**

(57)    A radar system comprises transmit antennas configured to transmit a radar signal and receive antennas that receive a radar return. The radar system further comprises circuitry configured to perform acts, the acts comprising generating a phase-shifted radar signal using a unique phase code that is commonly assigned to all transmitters included in the radar system. The acts further comprise transmitting the phase-shifted radar signal from transmit antennas and receiving a radar return at receive antennas. Additionally, the acts comprise, during signal processing, performing phase compensation by multiplying a radar signal received in the radar return by a phase compensation value that is commonly assigned to all receivers included in the radar system in order to remove the phase shift. The acts also comprise outputting an un-shifted processed radar signal.

**FIG. 7**

EP 4 582 829 A1

**Description**

BACKGROUND

Autonomous or assisted driving strategies have been facilitated through sensing an environment around a vehicle. Radar sensors are conventionally used in connection with detecting and classifying objects in an environment; advantages of radar over other types of sensors (such as cameras or lidar) include robustness in regard to lighting and weather conditions. Often, radar sensors are deployed with cameras and/or lidar sensors to provide different modes of detection and redundancy. In certain scenarios, performance of lidar and/or cameras is negatively impacted by environmental features, such as fog, rain, snow, bright sunlight, lack of adequate light, etc. Accordingly, in these scenarios, radar is relied heavily upon to detect and classify objects in the environment, while lidar and camera sensors are less heavily relied upon.

Conventionally, a radar sensor generates a radar tensor (which can also be referred to as a point cloud), and the radar tensor is processed to detect and classify objects in the environment. For instance, the radar tensor includes power measurements generated by the radar sensor along different dimensions, such as Doppler, range, azimuth, and elevation. The radar tensor is then further processed to detect, classify, and track objects in the scene over time. As radar systems increase in popularity and are included in more and more vehicles (or employed in other types of applications), interference may become increasingly problematic (where a radar signal emitted from a radar system of one vehicle may be detected by a radar system of another vehicle). While conventional approaches allow for objects to be detected, classified, and tracked over time, these approaches have not satisfactorily addressed problems created by interference and noise with regard to interference internal to a fleet of autonomous vehicles.

SUMMARY

The following is a brief summary of subject matter that is described in greater detail herein. This summary is not intended to be limiting as to the scope of the claims.

Described herein are various technologies relating to radar systems, and more specifically, radar systems employed in autonomous vehicles, aircrafts, watercrafts, and the like. With more particularity, various technologies described herein facilitate providing intra-fleet interference mitigation by employing a common phase code for all radar transmitters of a radar system so that each radar system employs a unique or quasi-unique phase code. According to an example, it is contemplated that all radar transmitters on a given autonomous vehicle can employ a common phase code.

With the ever-increasing number of automotive radar systems deployed on public roads, radar-to-radar interference has become one of the key challenges in automotive radar development. The described techniques mitigate the effects of radar interference in frequency modulated continuous wave (FMCW) systems by introducing an additional radar-unique phase code. That is, using the assigned unique phase code, the FMCW radar introduces phase jumps from chirp to chirp that are common to all transmit antennas of a radar system on the vehicle. The phase code is compensated on the receive side by phase shifting before the Doppler fast Fourier transform (FFT).

The unique phase code of each radar system introduces incoherency between its own transmit waveform and an interferer, which is useful for mitigating interference from radars of the same type (but with different phase codes) and continuous wave interferers. The added incoherence results in a spreading of the interfering energy in the Doppler domain, which enables a suitable detector to reduce the occurrence of ghost targets (false detections) stemming from the interference.

The described techniques thus facilitate deploying a large number of radars of the same type. The individual radars in a fleet of autonomous vehicles can be given a unique or quasi-unique static phase code, or can cycle through a set of predefined phase codes, or the vehicle's radar system can select its phase code based on internal or external logic.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

BRIEF DESCRIPTION OF THE DRAWINGS

Fig. 1 is a functional block diagram of an exemplary radar sensor.
Fig. 2 illustrates a more detailed view of the hardware logic component.
Fig. 3 shows another example of a radar sensor system.

Fig. 4 is an illustration of a radar network.
Fig. 5 illustrates an exemplary a signal flow without phase coding and compensation.
Fig. 6 illustrates an exemplary signal flow with phase coding and compensation.
Fig. 7 illustrates a methodology for mitigating intra-fleet interference between radar systems deployed on autonomous vehicles.
Fig. 8 is a functional block diagram of an exemplary AV.
Fig. 9 is an exemplary computing system.

DETAILED DESCRIPTION

Various technologies pertaining to automated vehicle (and other) radar systems are described herein. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary" is intended to mean serving as an illustration or example of something and is not intended to indicate a preference.

Radars of the same type usually transmit the same waveforms. Radar-to-radar interference in this scenario is difficult to mitigate, as the interfering radar signal looks like a reflection from a true target. This leads to an increase in "ghost" detections when multiple radars of the same type are transmitting simultaneously and with the same waveform in close proximity, which is a problem when scaling an autonomous vehicle fleet because autonomous vehicles rely heavily on radar data. Additionally, continuous wave (CW) interference is fully coherent in slow time for state-of-the-art frequency modulated continuous wave (FMCW) radar systems that are using time division multiplexing (TDM), frequency division multiplexing (FDM), or velocity-labeled multiplexing (VLM), as the observed interference does not change from chirp to chirp.

The introduced phase code described herein suppresses the effects of the interference by spreading the energy of the interferer in the Doppler domain. Introducing a phase coded multiplexing technique (phase coded multiplexing, Doppler domain multiplexing, etc.) can require as many doppler FFTs as transmit antennas. With the increasing number of antenna elements in radar systems, this translates to a non-negligible increase in complexity. In contrast, the described common phase code can be easily compensated as part of a windowing function, which is applied before the Doppler fast Fourier transform (FFT).

Conventional phase coded multiplexing techniques use the same phase codes for transmitter multiplexing for each radar of a given type (or at least only a few variations of the codes, since suitable code dictionaries are limited). This leads to limited robustness against interference from radars of the same type. The techniques described herein mitigate interference among radars of the same fleet, where each radar only utilizes one code out of the code dictionary. The proposed solution can even be applied on top of any other phase coded multiplexing technique by using an additional radar-unique phase code from a different dictionary than is used for the conventional multiplexing.

The described techniques employ a common phase code for all transmitters of a single radar system (which may comprise more than one radar sensor) deployed on an autonomous vehicle. The phase code is radar-unique or quasi-unique such that different radars of the same type and/or within the same fleet have different phase codes. The phase code applied to the transmitted signal is compensated by a multiplication on the receive side that is common for all transmitters/receivers on the vehicle before the Doppler FFT(s).

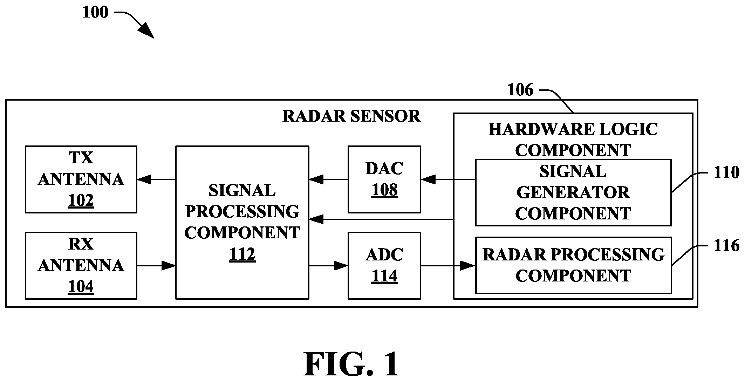

With reference now to Fig. 1, an exemplary radar sensor 100 is illustrated, in which various features, circuits, etc. described herein can be employed. The radar sensor 100 includes a transmit antenna (or antenna array) 102, a receive antenna (or antenna array) 104, and a hardware logic component 106. Briefly, the hardware logic component 106 is configured to prepare radar signals that are transmitted by the transmit antenna 102, and to compute target solutions indicating estimated positions and/or velocities of objects based upon radar returns and/or other radar signals received by the receive antenna 104. In exemplary embodiments, various components of the radar sensor 100 can be integrated as a same system-on-a-chip (SoC). In various embodiments, the radar sensor 100 can be employed on a vehicle, such as a land vehicle, an aircraft, to identify positions and velocities of objects in the operational environment of the vehicle.

In one embodiment, the radar sensor 100 further comprises one or more DACs 108. The hardware logic component 106 comprises a signal generator component 110 that prepares radar signals for transmission by way of the transmit antenna 102. The signal generator component 110 is configured to control the DAC 108 to cause the DAC 108 to generate an analog radar signal for transmission by the transmit antenna 102. In other words, the signal generator component 110 generates digital values that, when received by the DAC 108, cause the DAC 108 to output an analog radar signal having various desired signal characteristics. Hence, the radar sensor 100 is configured as a digitally modulated radar sensor, wherein characteristics of radar signals output by the transmit antenna 102 are digitally controlled by the signal generator component 110 of the hardware logic component 106. For example, the signal generator component 110 can be configured to control the DAC 108 such that the radar sensor operates as a phase modulated continuous wave (PMCW) radar sensor.

In another embodiment, the hardware logic component generates an analog signal that is provided directly to the signal processing component 112. For example, the transmit signal can be generated by an analog circuit and provided to the signal processing component 112 for transmission by the transmit antenna(s) 102.

The radar sensor 100 further includes an analog signal processing component 112. The signal processing component 112 is generally configured to perform various analog signal processing operations on analog signals that are to be output by the transmit antenna 102 and/or that are received by the receive antenna 104. By way of example, and not limitation, the signal processing component 112 can amplify a radar signal output by the DAC 108 to increase the power of the radar signal prior to transmission by way of the transmit antenna 102. In a further example, the signal processing component 112 can be configured to mix a radar signal output by the DAC 108 with a carrier signal to shift a center frequency of the radar signal. The signal processing component 112 can include any of various components that are configured to perform these various functions. For example, the signal processing component 112 can include mixers, amplifiers, filters, or the like. Functionality of the signal processing component 112 and its constituent components can be controlled by the hardware logic component 106. The transmit antenna 102 receives processed radar signals from the signal processing component 112 and emits the radar signals into an operational environment of the radar sensor 100.

The receive antenna 104 receives radar returns from the operational environment. In exemplary embodiments, the radar returns received by the receive antenna 104 comprise reflections, from objects in the operational environment of the sensor 100, of radar signals emitted by the transmit antenna 102. It is to be understood that the radar returns received by the receive antenna 104 can further include reflections of radar signals emitted by other radar emitters that are active within the operational environment of the radar sensor 100. As will be described in greater detail below, the technologies described herein can reduce transmitter leakage and receiver saturation by hopping between frequency subbands used for transmission and receiving. Responsive to receipt of radar returns from the operational environment of the sensor 100, the receive antenna 104 outputs an electrical signal that is indicative of the received radar returns. This electrical signal is referred to herein as a radar signal and is transmitted along one or more transmission lines in the radar sensor 100, as distinct from radar returns that are received by the receive antenna 104 as radiated signals propagating through air or free space in the operational environment of the radar sensor 100.

The signal processing component 112 receives a radar signal from the receive antenna 104. The signal processing component 112 is configured to perform various analog signal processing operations over radar signals received from the receive antenna 104. By way of example, and not limitation, the signal processing component 112 can perform various mixing, filtering, and amplification operations on radar signals output by the receive antenna 104. The signal processing component 112 can be configured to perform various of these signal processing operations (e.g., mixing) based further upon a radar signal transmitted by the transmit antenna 102.

The radar sensor 100 further comprises one or more ADCs 114 that receives a processed radar signal from the signal processing component 112. The ADC 114 digitally samples the radar signal and outputs digital values that are indicative of amplitude of the radar signal over time. These digital values are collectively referred to herein as radar data. The radar data output by the ADC 114 are indicative of the radar returns received by the receive antenna 104.

The hardware logic component 106 receives the radar data from the ADC 114. The hardware logic component 106 further comprises a radar processing component 116. The radar processing component 116 is configured to compute positions and/or velocities of targets in the operational environment of the radar sensor 100 based upon the radar data. In a non-limiting example, the radar processing component 116 can compute a range, a bearing, and/or a velocity of a target in the operational environment of the sensor 100 based upon the radar data.

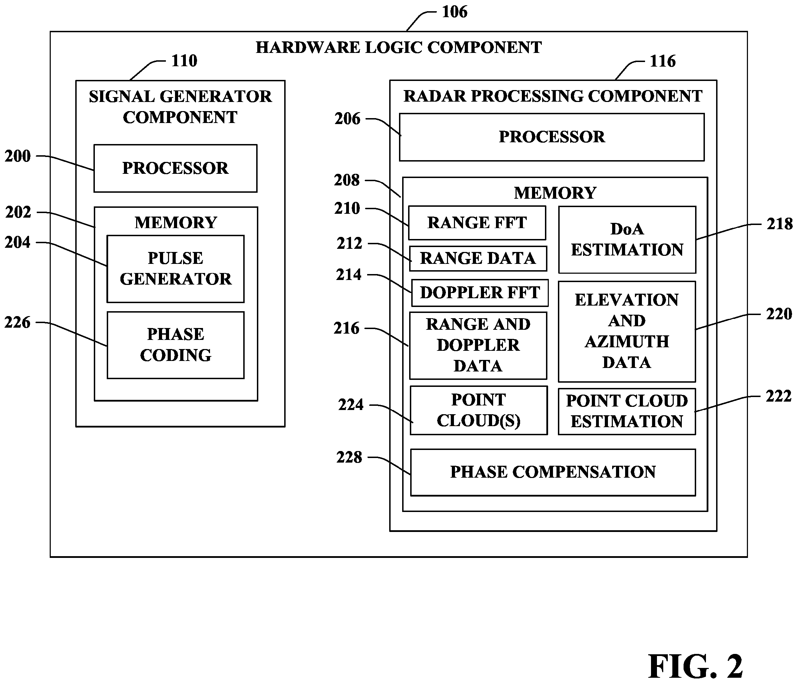

With reference now to Fig. 2, a more detailed view of the hardware logic component 106 is illustrated. The hardware logic component 106 comprises the signal generator component 110 and the radar processing component 116, as discussed with regard to Fig. 1. The signal generator component 110 comprises a processor 200 and a memory 202 configured to provide certain functionality as described herein. For example, the memory 202 can store computer-executable instructions that, when executed by the processor 200, cause the signal generator component 110 to perform certain acts. The memory 202 comprises a ramp/pulse generator component 204 that generates ramps/pulses (depending on the type of radar system) for transmission. In one embodiment, the ramp/pulse generator component 204 performs time division multiplexing and/or frequency division multiplexing on the signals to be transmitted.

The radar processing component 116 comprises a processor 206 and a memory 208 configured to provide certain functionality as described herein. For example, the memory 208 can store computer executable instructions that, when executed by the processor 206, cause the radar processing component 116 to perform certain acts. The memory 208 comprises a range fast Fourier transform (FFT) component 210 that is executed on a digitized signal received from an ADC, such as the ADC 114 of Fig. 1, to generate range data values 212 for objects detected in a received radar return. A Doppler FFT 214 is executed on the range values to generate range and Doppler data values 216. A direction of arrival (DoA) estimation component 218 (e.g., beamforming, discrete Fourier transform (DFT), or some other suitable manner of direction of arrival estimation) is then executed on the range and Doppler data values to generate elevation and azimuth data values 220. A point cloud estimation component 222 is executed to generate one or more multi-dimensional point clouds (radar tensors) 224 representing at least the range data values 212, the range and Doppler data values 216, and the elevation and azimuth data values 220.

The memory 202 of the signal generator component 110 further comprises a phase coding component 226 that applies a phase shift to a transmit radar signal, wherein the phase shift is common to all transmitters on the autonomous vehicle. The memory 208 of the radar processing component 116 comprises a phase compensation component 228 that reverses or undoes the phase shift in a signal reflected by a target object during signal processing on the receive side.

The phase coding component 226 introduces software-configurable phase shifts into the transmission chain when generating a signal for transmission. By way of example, a binary phase code that provides phase shifting by 180° can be used. However, the described techniques are not limited to a binary phase code and can use any desired phase shift (e.g., any desired phase shift keying (PSK), etc.). Additionally, the phase coding component 226 introduces the phase shifts according to a configurable code on a chirp-to-chirp basis. The phase code can be thought of as multiplying the transmit signal of each chirp by $e^{j\varphi k}$, k=1, ... , K, where $\varphi_k$ is the phase code entry for the k$^{th}$ chirp and K is the number of chirps.

In one embodiment, the phase code assigned to each radar is assigned by selecting a static phase code from a dictionary during assembly, flashing of the firmware, or start up. In another embodiment, the phase code assigned to each radar is periodically assigned and/or refreshed by cycling through the phase codes of a phase code dictionary.

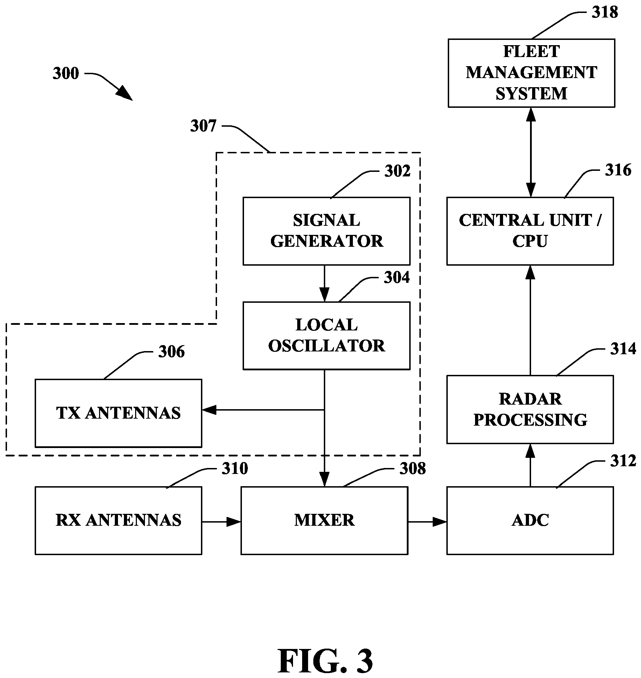

In still another embodiment, the phase code assigned to each radar is assigned by selecting a phase code per frame based on an external logic (e.g., remote fleet management system or CPU, a compass method, etc.) and/or an internal logic (e.g., radar internal interference detection, pseudo-random phase code selection, etc.). For instance, a remote fleet management system (see Fig. 3) can employ external logic to monitor all autonomous vehicles in the fleet, and upon detecting two vehicles with the same phase code approaching each other, can instruct one of the vehicle's radar systems to adopt a new phase code using the periodic assignment approach or the per-frame assignment approach to ensure that the two vehicles are employing different phase codes. Additionally or alternatively, the remote fleet management system (not shown) can assign a new phase code to one of the vehicles. The new phase code can be a static phase code or can be a new phase code that is employed while using the periodic or per-frame approach.

On the receiver side, before the Doppler FFT, the phase code from chirp to chirp is compensated by the phase compensation component 228 by multiplying the signal from the k$^{th}$ chirp by $e^{-j\varphi k}$. This multiplication can be integrated in the multiplication with the Doppler window function that is applied in FMCW radars to optimize side lobe levels. In one embodiment, the radar system employs a detector that has a level of robustness against noise-like interference, such as by adaptation of the detection thresholds based on the estimated noise level (e.g., constant false alarm rate (CFAR) or the like).

The phase shift applied by the phase coding component 226 can be, for example, a binary phase shift keying (BPSK) phase shift, a 16 PSK phase shift, a 12 PSK phase shift, or any other suitable phase shift.

Fig. 3 shows another example of a radar system 300. In contrast to the embodiments described with regard to Figs. 1 and 2, where signal processing is performed at the radar unit, in the example of Fig. 3, signal processing at the radar sensor terminates with generation of the point clouds, which are then transmitted to a central processing unit or computer where they are processed further. The sensor system 300 comprises a signal generator 302 that provides a signal to a local oscillator 304. The local oscillator 304 adjusts the signal for transmission via one or more transmit antennas 306. Collectively, the signal generator 302, local oscillator 304, and transmit antennas 306 form a transmitter 307. It will be understood that the transmitters described herein are not limited to the configuration of transmitter 307 and may comprise additional and/or different components in accordance with various aspects. Transmitter 307 is provided by way of example and is not to be construed in a limiting sense.

The local oscillator 304 also provides the transmit signal to a mixer 308, which combines the transmit signal with signals that have been reflected by an object and received by one or more receive antennas 310. The combined signal is then provided by the mixer 308 to an ADC 312, which digitizes the combined signal and provides the digitized signal to a radar processing component 314.

The radar processing unit 314 performs various acts on the digitized signal and provides functionality similar or identical to the functionality provided by the radar processing component 116 of the hardware logic component 106 (see, e.g., Figs. 1 and 2). The radar processing component 314 generates one or more multi-dimensional point clouds, which are then transmitted to a central processing unit or computer (PC) 316 for additional processing. A fleet management system 318 communicates with the CPU 316 and provides external logic that facilitates phase code assignments, updates, etc. as described herein.

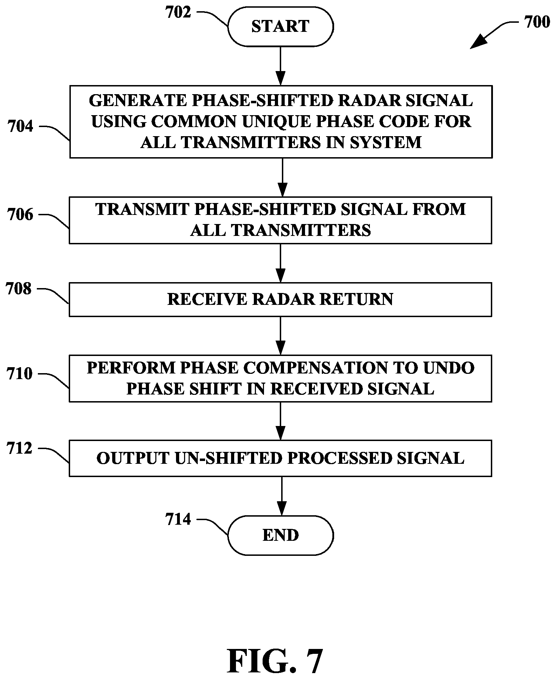

In one embodiment, the central processing unit 316 performs the post-point cloud processing steps described with regard to the radar processing component 116 of Fig. 2 and/or executes the method of Fig. 7. In another embodiment, the central processing unit 316 receives raw radar data from a radar sensor and processes the raw data to provide the functionality described herein.

In another embodiment, the signal generator 302 performs the phase coding described with regard to Fig. 2 when generating signal for transmission. The radar processing component 314 performs the phase compensation prior to Doppler FFT as described with regard to Fig. 2 when processing a received signal.

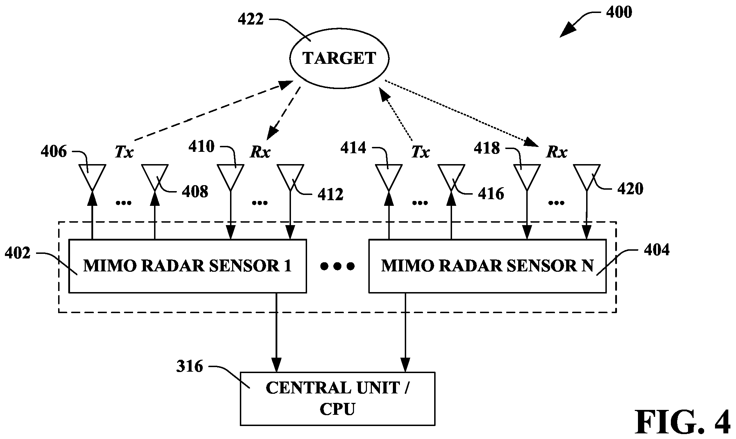

Fig. 4 is an illustration of a radar network 400 such as may be employed in conjunction with various features described herein. The radar network 400 comprises a first MIMO radar sensor 402 through an Nth radar sensor 404 (wherein N is an integer greater than 1), that provide one or both of point cloud data or raw data to a CPU 316. The first MIMO radar sensor 402 comprises a plurality of transmit antennas 406, 408, and a plurality of receive antennas 410, 412. Similarly, the Nth MIMO radar sensor 404 comprises a plurality of transmit antennas 414, 416, and a plurality of receive antennas 418, 420.

In one embodiment, transmit antennas 406, 408 transmit a signal using a first phase code that is assigned to the first MIMO radar sensor 402, the signal being reflected by a target 422, and the reflected signal being received by the plurality of receive antennas 410, 412. Transmit antennas 414, 416 transmit a signal using a second phase code that is assigned to the second MIMO radar sensor unit 404, the signal being reflected by the target 422, and the reflected signal being received by the plurality of receive antennas 418, 420.

In another embodiment, all transmit antennas 406, 408, 418, 420 employ a common phase code for their transmissions.

In another embodiment, the MIMO radar sensor units 402, 404 transmit raw radar data to the CPU 316 for processing and phase compensation.

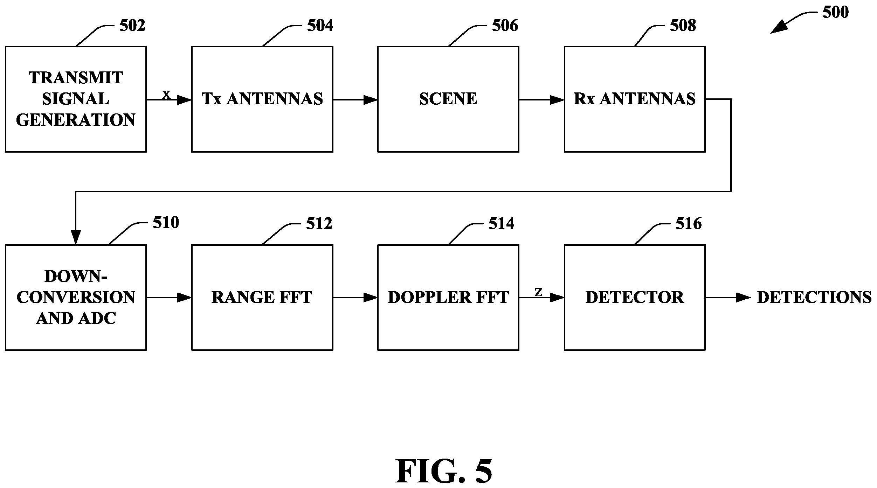

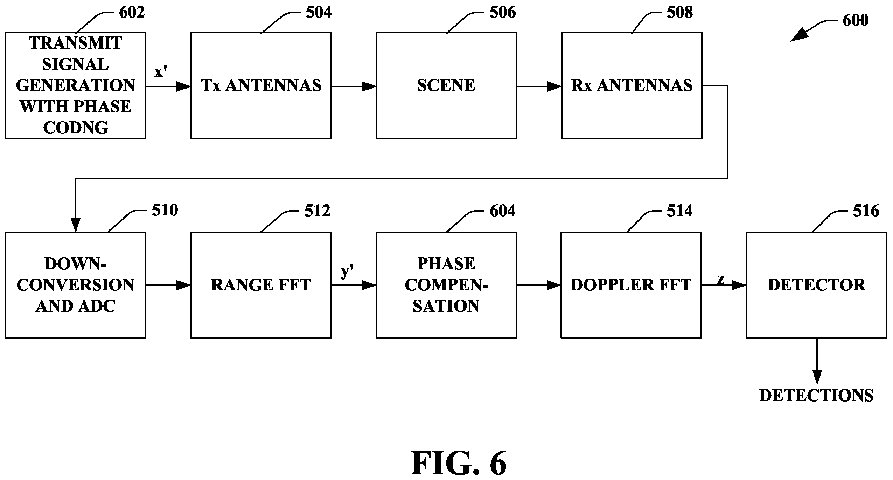

Figs. 5 and 6 illustrate signal flows with and without phase coding and compensation. In one or more embodiments, signal flows of Figs. 5 and 6 can be executed, performed, etc., by any of the systems, components, processors, etc., of Figs. 1-4, 8, and/or 9, and/or any combination(s) thereof.

Turning now to Fig. 5, a signal flow 500 without phase coding and compensation is shown to illustrate differences between the signal flow 500 and the signal flow 600 of Fig. 6, which includes phase coding and compensation. Transmit signal generation occurs at 502, and a transmit signal x is provided to transmit antennas 504. The transmit antennas transmit the signal x into the monitored scene 506 (i.e. the environment or area monitored by the radar). Receive antennas 508 receive a radar return that includes information about one or more object(s) by which the transmit signal x has been reflected. Down-conversion and analog-to-digital conversion (ADC) are performed at 510. At 512, a range FFT is performed to obtain range information related to the object(s). A Doppler FFT is performed at 514 to identify Doppler information related to the object(s). Output z including the range and Doppler information is provided to a detector (e.g., the CPU 316 of Fig. 3) for processing at 516, which outputs object detection information.

Fig. 6 illustrates a signal flow 600 with phase coding and compensation to illustrate differences as compared to the signal flow 500 of Fig. 5. As can be seen, the signal flow 600 includes the additional components of phase coding during transmit signal generation at 602 and phase compensation at 604 prior to the Doppler FFT at 514.

The described technique relates to phase code multiplexing, doppler domain multiplexing (DDM), etc., which are techniques for multiplexing multiple transmit antennas in order to synthesize a virtual antenna array for an enhanced angular estimation in radar. In contrast to conventional approaches, the proposed techniques use a phase code that is common to all transmitters in a radar sensor and/or all transmitters deployed on a given autonomous vehicle, which means that the phase code need not necessarily serve as a means for demultiplexing multiple transmit antennas.

The herein-described phase code introduces incoherency between the transmitted waveform of a radar system deployed on a host vehicle and the radar system of an interferer (e.g., a different vehicle employing the same type of radar) in the slow time. One advantage of this technique is that there is not a need to introduce additional FFTs for each transmitter, such as is the case for a phase code multiplexing and DDM. Instead, the signal processing chain remains almost unchanged. In this sense, the technique can be combined with any kind of multiplexing technique without introducing much computational overhead.

Every deployed radar of a certain type can be assigned a unique or quasi-unique phase code for its lifetime, or can cycle through a predefined set of codes, or can select a code based on an internal or external logic. The set of suitable phase codes with good cross-correlation properties may be limited; when the number of vehicles in the fleet exceeds the number of available phase codes, it is possible that one or more vehicles may be assigned the same phase code making the phase code quasi-unique. However, when the fleet is so large that it exceeds the number of available phase codes, the likelihood of two autonomous vehicles employing the same phase code encountering each other is at a minimum.

In one embodiment, the proposed technique can be combined with a phase code multiplexing technique. That is, vehicle radar systems can employ phase code multiplexing and an additional code that is common to all transmitters on the vehicle can be selected from a different dictionary than the one used for multiplexing in order to reduce interference between radars of the same fleet.

When generating transmit signal with phase coding at 602, a transmit signal x' is generated such that:

$$x'_k = e^{j\varphi_k} x_k$$

where $k$ denotes the $k^{th}$ chirp of the transmit signal, e is Euler's number, $j$ is the square root of -1, $\varphi$ is the phase code entry, and x is the transmit signal before phase coding.

During phase compensation at 604, a phase compensation value $e^{j\varphi k}$ is applied to a received return signal y to reverse or undo the effects of phase coding at 602, such that:

$$y'_k = e^{j\varphi_k} y_k \, .$$

The output of the Doppler FFT 514 becomes:

$$z_m = \sum_{k=0}^{K-1} w_k y_k e^{-j\frac{2\pi}{K} mk} = \sum_{k=0}^{K-1} w_k e^{-j\varphi_k} e^{j\varphi_k} y_k e^{-j\frac{2\pi}{K} mk} \, ;$$

therefore,

$$z_m = \sum_{k=0}^{K-1} w'_k y'_k e^{-j\frac{2\pi}{K} mk}$$

where $z_m$ denotes the $m^{th}$ output of the Doppler FFT (where $m$ ranges from 1 to M, and where $M$ is the FFT size in the Doppler domain), K is the total number of chirps in the signal, and $w'$ denotes phase-compensating windowing coefficient(s).

Fig. 7 illustrates an exemplary methodology relating to mitigating intra-fleet interference between radar systems deployed on autonomous vehicles within a fleet of autonomous vehicles. While the methodology is shown and described as being a series of acts that are performed in a sequence, it is to be understood and appreciated that the methodology is not limited by the order of the sequence. For example, some acts can occur in a different order than is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodology can be stored in a computer-readable medium, displayed on a display device, and/or the like.

Turning now solely to Fig. 7, a methodology 700 is illustrated for mitigating intra fleet interference in accordance with aspects described herein. The method begins at 702. At 704, a phase-shifted radar signal is generated using a unique phase code that is commonly assigned to all transmitters deployed in a radar system on an autonomous vehicle. At 706, the phase-shifted radar signal is transmitted from transmit antennas. At 708, a radar return is received at receive antennas. During signal processing, at 710, phase compensation is performed by multiplying a radar signal received in the radar return by a phase compensation value that is commonly assigned to all receivers deployed on the autonomous vehicle, in order to remove the phase shift. At 712, an un-shifted processed radar signal is output. The method terminates at 714.

In one embodiment, phase compensation is performed prior to Doppler analysis (Doppler FFT) during signal processing. In another embodiment, the unique phase code is assigned statically to the transmitters. This can be done, e.g., during radar system assembly, during flashing of firmware installed in the radar system, during startup of the radar system, etc. Additionally or alternatively, the unique phase code can be assigned periodically to the transmitters by cycling through phase codes in a phase code dictionary. In yet another embodiment, the unique phase code is assigned to the transmitters by selecting a unique phase code per frame based on at least one of external logic and internal logic.

The external logic can be provided by a remote fleet management system that manages autonomous vehicles in a fleet or via a compass method. For instance, the phase code can be selected based on compass orientation. For example, using 360 code words, each of the 360 degrees of the compass can be assigned a different code, and a code can be selected based on the sensor's heading (e.g., North is assigned 0 degrees, South 180 degrees, etc.). In this way, the only sensors that are assigned the same code are sensors that are facing the same direction and therefore do not interfere with each other. It will be understood that more or less than 360 code words can be employed using the compass method, and that the different directions can have any desired degree assignment (e.g., East is assigned 0 degrees, West is assigned 180 degrees, and so on).

The internal logic is based on radar internal interference detection information whereby if the sensor determines that it is experiencing interference, it selects a new code. For instance, the sensor can analyze received signals/detections using post-processing methods (e.g., outlier detection based on statistics, etc.) to identify interference. In another embodiment, the sensor can implement a listen-before-talk technique, where the sensor monitors the spectrum during transmission downtime to detect other transmitters in the vicinity that might interfere with the sensor.

In one or more embodiments, the method of Fig. 7 can be executed, performed, etc., by any of the systems, components, processors, etc., of Figs. 1-4, 8, and/or 9, and/or any combination(s) thereof.

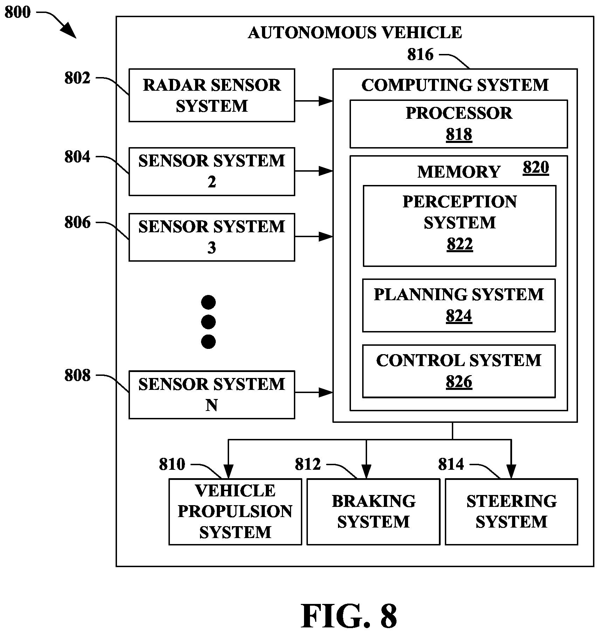

Various technologies described herein are suitable for use in connection with an autonomous vehicle (AV) that employs a radar system to facilitate navigation about roadways. Referring now to Fig. 8, an exemplary AV 800 is illustrated, wherein the AV 800 can navigate about roadways without human conduction based upon sensor signals output by sensor systems of the AV 800. The AV 800 includes a plurality of sensor systems 802-808 (a first sensor system 802 through an Nth sensor system 808). The sensor systems 802-808 may be of different types. For example, the first sensor system 802 is a radar sensor system, the second sensor system 804 may be a LiDaR sensor system, the third sensor system 806 may be a camera (image) system, and the Nth sensor system 808 may be a sonar system. Other exemplary sensor systems include GPS sensor systems, inertial sensor systems, infrared sensor systems, and the like. The various sensor systems 802-808 are arranged about the AV 800. The sensor systems 802-808 are configured to repeatedly (e.g., continuously, or periodically) output sensor data that is representative of objects and conditions in the driving environment of the AV 800.

The AV 800 further includes several mechanical systems that are used to effectuate appropriate motion of the AV 800. For instance, the mechanical systems can include but are not limited to, a vehicle propulsion system 810, a braking system 812, and a steering system 814. The vehicle propulsion system 810 may be an electric engine, an internal combustion engine, or a combination thereof. The braking system 812 can include an engine brake, brake pads, actuators, a regenerative braking system, and/or any other suitable componentry that is configured to assist in decelerating the AV 800. The steering system 814 includes suitable componentry that is configured to control the direction of movement of the AV 800.

The AV 800 additionally comprises a computing system 816 that is in communication with the sensor systems 802-808 and is further in communication with the vehicle propulsion system 810, the braking system 812, and the steering system 814. The computing system 816 includes a processor 818 and memory 820 that includes computer-executable instructions that are executed by the processor 818. In an example, the processor 818 can be or include a graphics processing unit (GPU), a plurality of GPUs, a central processing unit (CPU), a plurality of CPUs, an application-specific integrated circuit (ASIC), a microcontroller, a programmable logic controller (PLC), a field programmable gate array (FPGA), or the like.

The memory 820 comprises a perception system 822, a planning system 824, and a control system 826. Briefly, the perception system 822 is configured to identify the presence of objects and/or characteristics of objects in the driving environment of the AV 800 based upon sensor data output by the sensor systems 802-808. The planning system 824 is configured to plan a route and/or a maneuver of the AV 800 based upon data pertaining to objects in the driving environment that are output by the perception system 822. The control system 826 is configured to control the mechanical systems 812-814 of the AV 800 to effectuate appropriate motion to cause the AV 800 to execute a maneuver planned by the planning system 824.

The perception system 822 is configured to identify objects in proximity to the AV 800 that are captured in sensor signals output by the sensor systems 802-808. By way of example, the perception system 822 can be configured to identify the presence of an object in the driving environment of the AV 800 based upon images generated by a camera system included in the sensor systems 804-808. In another example, the perception system 822 can be configured to determine a presence and position of an object based upon radar data output by the radar sensor system 802. In exemplary embodiments, the radar sensor system 802 can be or include the radar sensor 80 and/or 300. In such embodiments, the perception system 822 can be configured to identify a position of an object in the driving environment of the AV 800 based upon the estimated range output by the radar sensor 80 and/or 300.

The AV 800 can be included in a fleet of AVs that are in communication with a common server computing system. In these embodiments, the server computing system can control the fleet of AVs such that radar sensor systems of AVs operating in a same driving environment (e.g., within line of sight of one another, or within a threshold distance of one another) employ different pulse sequence carrier frequencies. In an exemplary embodiment, a radar sensor system of a first AV can be controlled so as not to transmit pulse sequences having the same center frequencies as pulse sequences transmitted by a radar sensor system of a second AV at the same time. In further embodiments, the radar sensor system of the first AV can be controlled to transmit pulse sequences in a different order than a radar sensor system of a second AV. For instance, the radar sensor system of the first AV can be configured to transmit a set of pulse sequences at four different center frequencies A, B, C, and D in an order A, B, C, D. The radar sensor system of the second AV can be configured to transmit pulse sequences using a same set of center frequencies in a frequency order B, A, D, C. Such configurations can mitigate the effects of interference when multiple AVs that employ radar sensor systems are operating in a same driving environment.

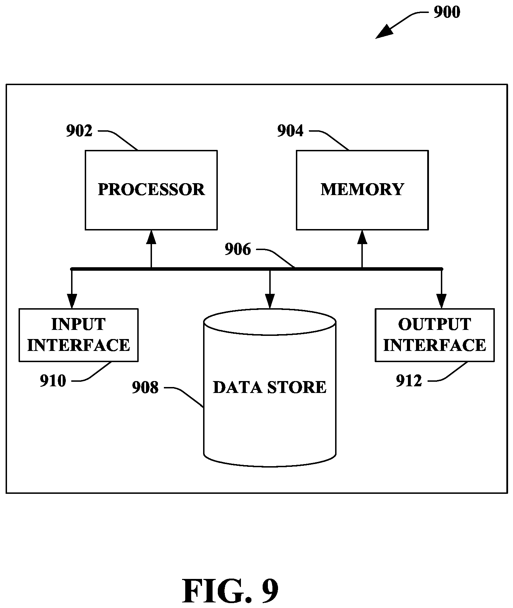

Referring now to Fig. 9, a high-level illustration of an exemplary computing device 900 is illustrated that can be used in accordance with the systems and methodologies disclosed herein. For instance, the computing device 900 may be or include the computing system 816. The computing device 900 includes at least one processor 902 that executes instructions that are stored in a memory 904. The instructions may be, for instance, instructions for implementing functionality described as being carried out by one or more modules, components, or systems discussed above or instructions for implementing one or more of the methods described above. The processor 902 may be a GPU, a plurality of GPUs, a CPU, a plurality of CPUs, a multi-core processor, a combination of the foregoing, etc. The processor 902 may access the memory 904 by way of a system bus 906. In addition to storing executable instructions, the memory 904 may also store radar data, beamformed radar data, neural network configurations, etc.

The computing device 900 additionally includes a data store 908 that is accessible by the processor 902 by way of the system bus 906. The data store 908 may include executable instructions, radar data, beamformed radar data, embeddings of these data in latent spaces, etc. The computing device 900 also includes an input interphase 910 that allows external devices to communicate with the computing device 900. For instance, the input interphase 910 may be used to receive instructions from an external computing device, etc. The computing device 900 also includes an output interphase 912 that interphases the computing device 900 with one or more external devices. For example, the computing device 900 may transmit control signals to the vehicle propulsion system 810, the braking system 812, and/or the steering system 814 by way of the output interphase 912.

Additionally, while illustrated as a single system, it is to be understood that the computing device 900 may be a distributed system. Thus, for instance, several devices may be in communication by way of a network connection and may collectively perform tasks described as being performed by the computing device 900.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include FPGAs, ASICs, Application-specific Standard Products (ASSPs), SOCs, Complex Programmable Logic Devices (CPLDs), etc.

Described herein are various technologies according to at least the following examples.

(A1) In an aspect, a method performed by a radar sensor system includes generating a phase-shifted radar signal using a unique phase code that is commonly assigned to all transmitters included in the radar system; transmitting the phase-shifted radar signal from transmit antennas. The method also includes receiving a radar return at receive antennas. The method further includes, during signal processing, performing phase compensation by multiplying a radar signal received in the radar return by a phase compensation value that is commonly assigned to all receivers included in the radar system in order to remove the phase shift. Additionally, the method includes outputting an un-shifted processed radar signal.

(A2) In some embodiments of the method of (A1), the method further includes performing phase compensation prior to Doppler analysis during signal processing.

(A3) In some embodiments of the method of at least one of (A1)-(A2), the method further includes statically assigning the unique phase code to the transmitters during at least one of: radar system assembly; flashing of firmware installed in the radar system; or startup of the radar system.

(A4) In some embodiments of the method of at least one of (A1)-(A3), the message further includes periodically assigning the unique phase code to the transmitters by cycling through phase codes in a phase code dictionary.

(A5) In some embodiments of the method of at least one of (A1)-(A4), the method further includes assigning the unique phase code to the transmitters by selecting a unique phase code per frame based on at least one of external logic and internal logic.

(A6) In some embodiments of the method of (A5), the external logic is provided by at least one of: a remote fleet management system that manages autonomous vehicles in a fleet; or a compass method.

(A7) In some embodiments of the method of (A5), the internal logic is based on radar internal interference detection information.

(B 1) In another aspect, a radar system is configured to perform at least one of the methods disclosed herein (e.g., any of the methods of (A1)-(A7)).

(C1) In yet another aspect, a radar system includes a hardware logic component (e.g., circuitry), where the hardware logic component is configured to control elements of a radar system to perform at least one of the methods disclosed herein (e.g., any of the methods of (A1)-(A7)).

(D1) In yet another aspect, a radar system includes transmit antennas configured to transmit a radar signal, receive antennas that receive a radar return; and circuitry configured to perform certain acts. The acts include generating a phase-shifted radar signal using a unique phase code that is commonly assigned to all transmitters included in the radar system. The acts further include transmitting the phase-shifted radar signal from transmit antennas. The acts also include receiving a radar return at receive antennas. The acts further include during signal processing, performing phase compensation by multiplying a radar signal received in the radar return by a phase compensation value that is commonly assigned to all receivers included in the radar system in order to remove the phase shift. Additionally, the acts include outputting an un-shifted processed radar signal.

(D2) In some embodiments of the radar system of (D1), the acts further include performing phase compensation prior to Doppler analysis during signal processing.

(D3) In some embodiments of the radar system of at least one of (D1)-(D2), the acts further include statically assigning the unique phase code to the transmitters during at least one of: radar system assembly; flashing of firmware installed in the radar system; or startup of the radar system.

(D4) In some embodiments of the radar system of at least one of (D 1)-(D3), the acts further include periodically assigning the unique phase code to the transmitters by cycling through phase codes in a phase code dictionary.

(D5) In some embodiments of the radar system of at least one of (D1)-(D4), the acts further include assigning the unique phase code to the transmitters by selecting a unique phase code per frame based on at least one of external logic and internal logic.

(D6) In some embodiments of the radar system of (D5), the external logic is provided by at least one of: a remote fleet management system that manages autonomous vehicles in a fleet; or a compass method.

(D7) In some embodiments of the radar system of (D5), the internal logic is based on radar internal interference detection information.

(E1) In another aspect, a radar analysis system includes one or more processors configured to perform certain acts. The acts include generating a phase-shifted radar signal using a unique phase code that is commonly assigned to all transmitters included in the radar system. The acts further include transmitting the phase-shifted radar signal from transmit antennas. The acts also include receiving a radar return at receive antennas. Additionally, the acts include, during signal processing, performing phase compensation by multiplying a radar signal received in the radar return by a phase compensation value that is commonly assigned to all receivers included in the radar system in order to remove the phase shift. The acts also include outputting an un-shifted processed radar signal.

(E2) In some embodiments of the radar analysis system of (E1), the acts further include performing phase compensation prior to Doppler analysis during signal processing.

(E3) In some embodiments of the radar analysis system of at least one of (E1-E2), the acts further include statically assigning the unique phase code to the transmitters during at least one of: radar system assembly; flashing of firmware installed in the radar system; or startup of the radar system.

(E4) In some embodiments of the radar analysis system of at least one of (E1-E3), the acts further include periodically assigning the unique phase code to the transmitters by cycling through phase codes in a phase code dictionary.

(E5) In some embodiments of the radar analysis system of at least one of (E1-E4), the acts further include assigning the unique phase code to the transmitters by selecting a unique phase code per frame based on at least one of external logic and internal logic.

(E6) In some embodiments of the radar analysis system of (E5), the external logic is provided by at least one of: a remote fleet management system that manages autonomous vehicles in a fleet; or a compass method; and the internal logic is based on radar internal interference detection information.

(F1) In still yet another aspect, use of any of the radar systems (e.g., any of (B 1), (C1), (D1)-(D7) or (E1-E6)) to detect and classify a target is contemplated.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**Claims**

1. A method performed by a radar system, the method comprising:

   generating a phase-shifted radar signal using a unique phase code that is commonly assigned to all transmitters included in the radar system;
   transmitting the phase-shifted radar signal from transmit antennas;
   receiving a radar return at receive antennas;
   during signal processing, performing phase compensation by multiplying a radar signal received in the radar return by a phase compensation value that is commonly assigned to all receivers included in the radar system in order to remove the phase shift; and
   outputting an un-shifted processed radar signal.

2. The method of claim 1, further comprising performing phase compensation prior to Doppler analysis during signal processing.

3. The method of any one of claims 1-2, further comprising statically assigning the unique phase code to the transmitters during at least one of:

   radar system assembly;
   flashing of firmware installed in the radar system; or
   startup of the radar system.

4. The method of any one of claims 1-3, further comprising periodically assigning the unique phase code to the transmitters by cycling through phase codes in a phase code dictionary.

5. The method of any one of claims 1-4, further comprising assigning the unique phase code to the transmitters by selecting a unique phase code per frame based on at least one of external logic and internal logic.

6. The method of claim 5, wherein the external logic is provided by at least one of:

   a remote fleet management system that manages autonomous vehicles in a fleet; or
   a compass method.

7. The method of claim 5, wherein the internal logic is based on radar internal interference detection information.

8. A radar system comprising:

   transmit antennas configured to transmit a radar signal;
   receive antennas that receive a radar return; and
   circuitry configured to perform acts comprising:

      generating a phase-shifted radar signal using a unique phase code that is commonly assigned to all transmitters included in the radar system;
      transmitting the phase-shifted radar signal from transmit antennas;
      receiving a radar return at receive antennas;

during signal processing, performing phase compensation by multiplying a radar signal received in the radar return by a phase compensation value that is commonly assigned to all receivers included in the radar system in order to remove the phase shift; and

outputting an un-shifted processed radar signal.

9. The radar system of claim 8, the acts further comprising performing phase compensation prior to Doppler analysis during signal processing.

10. The radar system of any one of claims 8-9, the acts further comprising statically assigning the unique phase code to the transmitters during at least one of:

radar system assembly;
flashing of firmware installed in the radar system; or
startup of the radar system.

11. The radar system of any one of claims 8-10, the acts further comprising periodically assigning the unique phase code to the transmitters by cycling through phase codes in a phase code dictionary.

12. The radar system of any one of claims 8-11, the acts further comprising assigning the unique phase code to the transmitters by selecting a unique phase code per frame based on at least one of external logic and internal logic.

13. The radar system of claim 12, wherein the external logic is provided by at least one of:

a remote fleet management system that manages autonomous vehicles in a fleet; or
a compass method.

14. The radar system of claim 12, wherein the internal logic is based on radar internal interference detection information.

15. The radar system of any one of claims 8-14, employed in an autonomous vehicle.

**FIG. 1**

EP 4 582 829 A1

**FIG. 2**

EP 4 582 829 A1

FIG. 3

FIG. 4

**FIG. 5**

**FIG. 6**

702 — ( START )

700

704 —
GENERATE PHASE-SHIFTED RADAR SIGNAL
USING COMMON UNIQUE PHASE CODE FOR
ALL TRANSMITTERS IN SYSTEM

706 —
TRANSMIT PHASE-SHIFTED SIGNAL FROM
ALL TRANSMITTERS

708 —
RECEIVE RADAR RETURN

710 —
PERFORM PHASE COMPENSATION TO UNDO
PHASE SHIFT IN RECEIVED SIGNAL

712 —
OUTPUT UN-SHIFTED PROCESSED SIGNAL

714 — ( END )

# FIG. 7

**FIG. 8**

900

| PROCESSOR | MEMORY |

902 904

906

| INPUT INTERFACE | DATA STORE | OUTPUT INTERFACE |

910 908 912

# FIG. 9

**EUROPEAN SEARCH REPORT**

Application Number

EP 24 15 0374

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2018/088231 A1 (MORITA TADASHI [JP] ET AL) 29 March 2018 (2018-03-29)<br>* abstract; figures 1-11 *<br>* paragraph [0024] - paragraph [0031] *<br>* paragraph [0049] - paragraph [0052] *<br>* paragraph [0065] - paragraph [0115] *<br>----- | 1-15 | INV.<br>G01S7/02<br>G01S13/931<br>G01S13/32 |
| Y | US 2023/288533 A1 (VAUCHER CICERO SILVEIRA [NL] ET AL) 14 September 2023 (2023-09-14)<br>* abstract; figures 1-3 *<br>* paragraph [0001] - paragraph [0027] *<br>----- | 1-15 | |
| Y<br>A | US 2009/003412 A1 (NEGORO NOBORU [JP] ET AL) 1 January 2009 (2009-01-01)<br>* paragraph [0001] - paragraph [0013] *<br>----- | 3,10<br>1,2,4-9,<br>11-15 | |
| Y<br>A | WO 2023/038765 A1 (QUALCOMM INC [US]) 16 March 2023 (2023-03-16)<br>* paragraph [0087] - paragraph [0101] *<br>* paragraph [0002] - paragraph [0005] *<br>* abstract; figures 6-7 *<br>----- | 4,11<br>1-3,<br>5-10,<br>12-15 | TECHNICAL FIELDS SEARCHED (IPC)<br><br>G01S |
| Y<br>A | KR 2023 0001783 A (KOREA AEROSPACE RES INST [KR]) 5 January 2023 (2023-01-05)<br>* abstract; figure 1 *<br>* paragraph [0035] - paragraph [0076] *<br>----- | 5-7,<br>12-14<br>1-4,<br>8-11,15 | |

The present search report has been drawn up for all claims

| Place of search | Date of completion of the search | Examiner |
|---|---|---|
| Munich | 4 July 2024 | López de Valle, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 0374

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2024

| Patent document cited in search report | Publication date | Patent family member(s) | | Publication date |
|---|---|---|---|---|
| US 2018088231 A1 | 29-03-2018 | CN | 107884770 A | 06-04-2018 |
| | | EP | 3301475 A1 | 04-04-2018 |
| | | JP | 2018054494 A | 05-04-2018 |
| | | US | 2018088231 A1 | 29-03-2018 |
| US 2023288533 A1 | 14-09-2023 | CN | 116736257 A | 12-09-2023 |
| | | EP | 4242688 A1 | 13-09-2023 |
| | | US | 2023288533 A1 | 14-09-2023 |
| US 2009003412 A1 | 01-01-2009 | JP | 2008249693 A | 16-10-2008 |
| | | US | 2009003412 A1 | 01-01-2009 |
| WO 2023038765 A1 | 16-03-2023 | CN | 117940789 A | 26-04-2024 |
| | | EP | 4399543 A1 | 17-07-2024 |
| | | WO | 2023038765 A1 | 16-03-2023 |
| KR 20230001783 A | 05-01-2023 | NONE | | |

EPO FORM P0459